# EUROPÄISCHE PATENTSCHRIFT

(11) **EP 3 100 648 B1**
(45) Veröffentlichungstag und Bekanntmachung des Hinweises auf die Patenterteilung: **31.08.2022**
(21) Anmeldenummer: 15170538.1
(22) Anmeldetag: 03.06.2015
(51) Int. Cl.: A47F 9/04, G07G 1/00, G06Q 20/20

(54) **VORRICHTUNG UND VERFAHREN ZUM IDENTIFIZIEREN UND VERFOLGEN EINES OBJEKTES**
DEVICE AND METHOD FOR IDENTIFYING AND TRACKING AN OBJECT
DISPOSITIF ET PROCEDE DESTINES A L'IDENTIFICATION ET AU SUIVI D'UN OBJET

(43) Veröffentlichungstag der Anmeldung: 07.12.2016
(73) Patentinhaber: Wincor Nixdorf International GmbH, 33106 Paderborn (DE)
(72) Erfinder: BAITZ, Günter, 13629 Berlin (DE); SCHÄFER, Oliver, 10369 Berlin (DE)

(56) Entgegenhaltungen:
- WO-A2-2006/105376
- US-A1- 2014 052 555
- US-A1- 2015 002 675
- US-B1- 6 236 736
- US-B1- 8 448 858

## Beschreibung

Die Erfindung betrifft eine Vorrichtung und ein Verfahren zum Identifizieren und Verfolgen eines Objektes, das zwischen einem Ursprungsort und einem Zielort zumindest teilweise automatisch transportiert wird. Die Vorrichtung und das Verfahren sind insbesondere dazu geeignet und vorgesehen, Waren im Kassenbereich eines Supermarktes oder eines anderen Wareneinkaufsmarktes zu identifizieren und zu verfolgen.

In modernen Supermärkten und anderen Einkaufsläden werden zunehmend Selbstbedienungskassen, auch als "Self Checkout-Geräte" (SCO) bezeichnet, eingesetzt, die herkömmliche Kassen ersetzen und bei denen ein Erfassen der gekauften Ware entweder unter Mithilfe des Kunden, der die gekaufte Ware selbst scannt, oder vollständig selbständig erfolgt. Nach der Erfassung der gekauften Ware begleichen die Kunden den fälligen Betrag an einem Bezahlautomaten.

Der Einsatz von Selbstbedienungskassen öffnet jedoch die Gefahr eines Missbrauchs durch den Kunden. Beispielsweise kann ein Kunde versuchen, einen Artikel am Scan-Bereich der Selbstbedienungskasse vorbei zu schleusen und ungescannt im Ablagebereich abzulegen. Ein anderes Beispiel für einen Missbrauch besteht darin, einen gescannten Artikel im Ablagebereich durch einen anderen, nicht gescannten Artikel zu ersetzen, wobei die Gesamtzahl der Artikel konstant bleibt, so dass eine solche Manipulation nur schwer erkennbar ist. Des Weiteren besteht bei Selbstbedienungskassen die erhöhte Gefahr einer versehentlichen Fehlbedienung durch den Kunden, die ebenfalls dazu führt, dass nicht alle zu kaufenden Artikel erfasst bzw. diese nicht korrekt erfasst werden.

Es besteht somit ein Bedarf, die Erkennungsmechanismen einer Selbstbedienungskasse zu verbessern und hierdurch die Möglichkeit eines Missbrauchs, einer Manipulation oder einer versehentlichen Fehlbedienung zu reduzieren.

Hierzu ist es aus der US 7 034 679 B2 bekannt, eine Ware nach dem Scannen in einem Ablagebereich mittels einer Sicherheitswaage zu wiegen. Zusätzlich kann der Ablagebereich durch eine Kamera überwacht werden. Solche Maßnahmen sind jedoch immer noch manipulierbar. So kann eine Sicherheitswaage beispielsweise manipuliert werden, indem gescannte und damit registrierte Artikel durch unregistrierte Artikel mit nahezu gleichem Gewicht, aber abweichendem Preis vertauscht werden, um dadurch das tatsächliche Scanergebnis zugunsten des Kunden zu beeinflussen. Eine im Ablagebereich angeordnete Kamera kann manipuliert werden, indem gescannte und damit registrierte Artikel mit unregistrierten Artikel gemeinsam und dabei für die Kamera verdeckt (zum Beispiel durch Stapelung) zeitgleich abgelegt werden.

Aus der US 2014/0176719 A1, der US 2005/0189412 A1 und der WO 2010/075131 A2 sind Selbstbedienungskassen bekannt, die zur Vermeidung eines Warenverlustes einzelne Bereiche der Selbstbedienungskasse mit einer Videokamera überwachen.

Die US 8 448 858 B1 beschreibt ein System zur videogestützten Zählung und/oder Identifikation von Gegenständen bei Transaktionen in einem Verkaufsbereich. Dabei wird die aus einer oder mehreren Videokameras gewonnene Information mit Transaktionsdaten eines Transaktionsterminals verglichen, um betrügerische oder fehlerhafte Handlungen eines Bedieners zu bemerken.

Aus der US 2014/0052555 A1 ist ein bildverarbeitendes Verfahren zur Identifikation von Waren an Verkaufskassen bekannt, bei welchem ein Detektor für digitale Wasserzeichen derart trainiert werden kann, dass je nach der individuellen Art und Weise, in der ein Kassierer einzelne Waren vor die Kamera hält, bestimmte Abschnitte der Videodaten bei der Auswertung priorisiert werden.

Die US 6 236 736 B1 offenbart ein System zum Erkennen von Bewegungsmustern, das eine Videokamera beinhaltet.

Ausgehend von diesem Stand der Technik liegt der vorliegenden Erfindung die Aufgabe zugrunde, eine Vorrichtung und ein Verfahren zum Identifizieren und Verfolgen eines Objektes bereitzustellen, die die Gefahr einer Manipulation beim Verfolgen des Objektes reduzieren. Die Vorrichtung und das Verfahrens sollen insbesondere dazu geeignet sein, die Möglichkeiten eines Missbrauchs oder einer Fehlbedienung bei einem Bezahlvorgang an einer Selbstbedienungskasse zu reduzieren.

Diese Aufgabe wird erfindungsgemäß durch eine Vorrichtung mit den Merkmalen des Anspruchs 1 und ein Verfahren mit den Merkmalen des Anspruchs 9 gelöst. Ausgestaltungen der Erfindung sind in den Unteransprüchen angegeben.

Danach zeichnet sich die erfindungsgemäße Lösung dadurch aus, dass ein Objekt, das zwischen einem Ursprungsort und einem Zielort transportiert wird, unter Verwendung mindestens einer Kamera identifiziert und während des Transports des Objektes vom Ursprungsort bis zum Zielort lückenlos verfolgt wird. Dabei ist die Vorrichtung nach Anspruch 1 ausgebildet, einen oder mehrere spezifische Körperteile (z.B. Finger, Hand, Armbeuge) einer Person zu erkennen und auf dieser Grundlage für die mindestens eine Kamera ein Analysebereich einzustellen, in dem eine Identifizierung des Objekts erfolgen kann.

Die erfindungsgemäß vorgesehene lückenlose Verfolgung eines Objektes zwischen Ursprungsort und Zielort erlaubt es, ein Objekt sicher und eindeutig bis zum Zielort zu verfolgen und dabei auszuschließen, dass das Objekt den Transportweg verlässt und/oder an irgendeiner Stelle des Transportweges ausgetauscht wird. Damit wird die Möglichkeit von Manipulationen, insbesondere im Falle der Realisierung der Vorrichtung an einer Selbstbedienungskasse, deutlich reduziert.

Die Erfindung sieht vor, dass das Objekt zwischen dem Ursprungsort und dem Zielort transportiert wird. Ein solcher Transport kann automatisch beispielsweise über ein oder mehrere Warentransportbänder erfolgen. Jedoch kann der Transport ganz oder teilweise auch manuell durch den Kunden bzw. Bediener erfolgen, beispielsweise indem manuell eine oder mehrere Objekte von einem Warenkorb auf ein Warentransportband gelegt oder an einer Warenerfassungseinheit vorbeigeführt werden. In einer Ausgestaltung der Erfindung erfolgt der Transport eines Objekts zwischen Ursprungsort und Zielort zumindest teilweise automatisch.

Die erfindungsgemäße Lösung überwacht den Transport eines Objektes vom Ursprungsort aus. Der Ursprungsort ist dabei insbesondere derjenige Ort, von dem aus ein Kunde oder Bediener den Transport des Objektes bewusst initiiert, beispielsweise um einen Bezahlvorgang für das Objekt und gegebenenfalls weiterer Objekte, die er zu kaufen beabsichtigt, zu starten. Der Ursprungsort ist beispielsweise ein Warenkorb, in dem sich das Objekt befindet, oder ein Bereich auf einem Warentransportband, auf den ein Kunde das Objekt gelegt hat. Ursprungsort und Zielort sind dabei beispielsweise durch einen Bezahlvorgang in dem Sinne miteinander gekoppelt, als der Ursprungsort derjenige Ort ist, in dem ein Objekt zur Einleitung eines Bezahlvorgangs positioniert wird und der Zielort derjenige Ort ist, indem ein Objekt nach Vollendung des Bezahlvorgangs zur Mitnahme entnommen werden kann.

Gemäß einer Ausgestaltung der Erfindung weist die Vorrichtung eine Vielzahl von Kameras auf, die an verschiedenen Orten der Vorrichtung installiert sind. Dabei ist vorgesehen, dass die Bildbereiche, die die Kameras erfassen, aneinander angrenzen oder einander überlappen. Die von den Kameras bereitgestellten Informationen werden an eine Auswerteinheit übertragen. Da die Bildbereiche der Kamera aneinander angrenzen oder überlappen, ist sichergestellt, dass ein Objekt vom Ursprungsort bis zum Zielort lückenlos verfolgt werden kann. Die Zusammenführung der Aufnahmen der einzelnen Kameras erfolgt dabei in der Auswerteinheit. Eine Auswerteinheit kann dabei auch vorgesehen sein, wenn lediglich eine einzige Kamera vorgesehen ist. Die Auswerteinheit kann eine gesonderte Einrichtung sein, beispielsweise ein Computer mit darauf installierter Software, oder in ein oder mehrere der Kameras integriert sein.

Gemäß einer alternativen Ausgestaltung der Erfindung weist die Vorrichtung nur eine einzige Kamera auf, die derart angeordnet und ausgebildet ist, dass sie das Objekt identifizieren und den Transport des Objektes vom Ursprungsort bis zum Zielort lückenlos verfolgen kann.

Eine weitere Ausgestaltung der Erfindung sieht vor, dass die mindestens eine Kamera dazu ausgebildet ist, 3D-Informationen zu dem Objekt zu erfassen. Hierzu kann beispielsweise vorgesehen sein, dass Kameras in Form von Stereoanordnungen eingesetzt werden, um dreidimensionale Informationen zu erfassen, oder dass Kameras eingesetzt werden, die ein dreidimensionales Muster, beispielsweise ein Punktgitter, auf das Objekt projizieren, um auf diese Weise 3D-Informationen auswerten zu können.

Gemäß einer Ausführungsvariante der vorliegenden Erfindung ist vorgesehen, dass die Vorrichtung Mittel aufweist, die dazu vorgesehen und ausgebildet sein, anhand der von der mindestens einen Kamera bereitgestellten Informationen mindestens ein Merkmal des Objektes zumindest am Ursprungsort und am Zielort zu erfassen. Dabei kann vorgesehen sein, dass das Vorhandensein eines Merkmals auch während des Transportes an einer Mehrzahl von Orten erfasst wird, insbesondere von jeder involvierten Kamera. In jedem Fall ist es möglich, den korrekten Transport eines Objektes vom Ursprungsort bis zum Zielort dadurch zu verifizieren, dass das Objekt über das mindestens eine Merkmal sowohl am Ursprungsort als auch am Zielort eindeutig identifiziert wird. Sofern die gleichen Merkmale erfasst werden, was vorzugsweise der Fall ist, können dabei die am Ursprungsort und ihrem Zielort erfassten Merkmale verglichen werden.

Ein Merkmal des Objektes, das von mindestens einer der Kameras erfasst wird, kann grundsätzlich jedes Merkmal sein, dass eine Identifizierung des Objektes ermöglicht. Beispielsweise kann es sich um eine bestimmte Form oder eine bestimmte Farbe oder Farbkombination des Objektes handeln. Eine weitere Ausführungsvariante sieht vor, dass eine Schrifterkennung erfolgt und beispielsweise eine bestimmte Bezeichnung oder Marke des Produktes erkannt wird. Auch kann ein Merkmal des Objektes, das bestimmt wird, ein bestimmtes Logo sein.

Allgemein wird hierzu angemerkt, dass eine Identifizierung des Objektes im Sinne der vorliegenden Erfindung nicht zwingend bedeutet, dass das Objekt absolut identifiziert wird, beispielsweise indem der Barcode oder ein digitales Wasserzeichen des Objektes erfasst wird. Eine Identifizierung im Sinne der vorliegenden Erfindung liegt bereits dann vor, wenn eine Identifizierung des Objektes in der Weise erfolgt, dass das Objekt von anderen Objekten, die sich im Umfeld des betrachteten Objektes befinden (beispielsweise ebenfalls in einem Warenkorb liegen) unterscheidbar ist. Wenn also beispielsweise zehn Objekte mit unterschiedlicher Farbe oder Farbkombinationen benachbart am Ursprungsort angeordnet sind, so reicht es zur Identifizierung dieser Objekte aus, die unterschiedlichen Farben bzw. Farbkombinationen zu erfassen.

Eine Identifizierung kann aber natürlich auch weitergehend erfolgen, indem eine Mehrzahl von Meta-Informationen zu dem Objekt erfasst wird. Dies kann beispielsweise dadurch erfolgen, dass ein auf dem Objekt angeordneter Barcode und/oder ein auf dem Objekt angeordnetes digitales Wasserzeichen erfasst und ausgewertet wird. Hierzu kann vorgesehen sein, dass mindestens eine der Kameras dazu ausgebildet ist, einen auf dem Objekt angeordneten Barcode und/oder ein auf dem Objekt angeordnetes digitales Wasserzeichen zu erfassen. Der Barcode und/oder das digitale Wasserzeichen wird dabei bevorzugt von jeder der Kameras und zumindest am Ursprungsort oder am Zielort erfasst, so dass ein lückenloses identifizieren und Verfolgen des Objektes möglich ist.

Gemäß einer weiteren Ausgestaltung ist die erfindungsgemäße Vorrichtung dazu ausgebildet, unter Verwendung der Mindestens einen Kamera eine Mehrzahl von Objekten, die am Ursprungsort bereitgestellt werden, bis zum Zielort lückenlos zu verfolgen, und diese Objekte einschließlich ihrer Anzahl am Zielort zu erkennen. Dies ermöglicht, alle am Ursprungsort und/oder auf dem Weg befindlichen Objekte inklusive ihrer Anzahl am Zielort wieder zu erkennen.

In einer Ausgestaltung umfasst die erfindungsgemäße Vorrichtung eine Erkennungseinheit, in der das Objekt gesondert identifiziert und registriert wird. Eine solche Erkennungseinheit ist beispielsweise ein Barcode-Scanner, eine Barcode-Kamera oder jeder andere Vorrichtung, die eine Identifizierung eines Objektes dahingehend ermöglicht, dass der Kaufpreis des Objektes ermittelbar ist. Dabei ist vorgesehen, dass die durch eine solche Erkennungseinheit erfolgte Identifizierung und Registrierung des Objektes dazu benutzt wird, einen Abgleich mit der Identifizierung des Objektes vorzunehmen, die unter Verwendung der Mindestens einen Kamera erfolgt. Die Kombination der erfindungsgemäßen fortlaufenden und dabei lückenlosen Verfolgung eines Objektes vom Ursprungsort bis zum Zielort mit der zusätzlich erfolgenden Identifizierung des Objektes durch die Erkennungseinheit bzw. der damit einhergehende Abgleich ermöglichen es, die valide und vollständige Durchführung des Identifizierungsprozesses (z. B. Scanprozesses) durch die Erkennungseinheit zu bestätigen bzw. Unstimmigkeiten aufzuzeigen, um den Bediener und/oder das Personal entsprechend zu benachrichtigen.

Denn wenn die Anzahl der Objekte, die durch die Erkennungseinheit identifiziert wird, von der Anzahl der Objekte abweicht, die durch die lückenlose Erfassung unter Verwendung der Mindestens einen Kamera erfasst wird, so liegt offensichtlich eine Manipulation, ein Missbrauch oder eine versehentliche Fehlbedienung im Hinblick auf das Durchlaufen des Objektes durch die Erkennungseinheit vor. Die durch die Erkennungseinheit erfassten Objekte können somit abgeglichen werden mit den Objekten, die bei der lückenlosen Überwachung zwischen Ursprungsort und Zielort erfasst werden.

Gemäß einer Ausgestaltung umfasst die erfindungsgemäße Vorrichtung ein oder mehrere Kameras, die derart angeordnet sind, das sie
- das Objekt am Ursprungsort (zum Beispiel einem Warenkorb oder einem Anfangsbereich eines Warentransportbandes) erkennen,
- den Transport des Objektes vom Ursprungsort zu der Erkennungseinheit überwachen, wobei dieser Transport in mehreren Schritten erfolgen kann, beispielsweise zunächst von einem Warenkorb auf ein Warentransportband und anschließend vom Warentransportband zur Erkennungseinheit,
- den weiteren Transport des Objektes von der Erkennungseinheit zum Zielort überwachen, wobei dieser Transport wiederum unter Verwendung eines oder mehrerer Warentransportbänder erfolgen kann, und
- das Objekt am Zielort (beispielsweise einen weiteren Warenkorb, dem Endbereich eines Warentransportbandes, einer Warenablage, in der Packmulde, einem Packtisch etc.) erfassen.

Der Artikel wird somit über die gesamte Wegstrecke lückenlos überwacht. Dabei kann vorgesehen sein, dass dem Ursprungsort, einzelnen Warentransportbändern, der Erkennungseinheit und/oder dem Zielort eigene Kameras zugeordnet sind.

Die vorliegende Erfindung betrifft auch ein Verfahren nach Anspruch 9 zum Identifizieren und Verfolgen eines Objektes, das zwischen einem Ursprungsort und einem Zielort transportiert wird. Erfindungsgemäß wird unter Verwendung mindestens einer Kamera das Objekt identifiziert und der Transport des Objektes vom Ursprungsort bis zum Zielort lückenlos verfolgt. Dabei werden ein oder mehrere spezifische Körperteile einer Person automatisch erkannt, und auf dieser Grundlage wird für die mindestens eine Kamera ein Analysebereich eingestellt, in dem eine Identifizierung des Objekts erfolgen kann.

Gemäß einer Ausgestaltung der Erfindung ist vorgesehen, dass ein Merkmal des Objektes zumindest am Ursprungsort und am Zielort erfasst und auf diese Weise festgestellt wird, ob das betrachtete Objekt vom Ursprungsort bzw. zum Zielort transportiert wurde. Ein solches Merkmal eines Objektes, das erfasst wird, ist beispielsweise ein optisches Merkmal, ein Barcode oder ein digitales Wasserzeichen.

Gemäß einer Ausgestaltung des Verfahrens durchläuft das Objekt bei seinem Transport zwischen Ursprungsort und Zielort eine Erkennungseinheit, in der das Objekt gesondert identifiziert und registriert wird. Dabei kann vorgesehen sein, dass das Durchlaufen der Erkennungseinheit automatisch erfolgt, beispielsweise auf einem Warenbeförderungsband, so dass bei einem normalen Transport des Objektes die Erkennungseinheit stets durchlaufen wird. Das Ergebnis der Identifizierung des Objektes durch die Erkennungseinheit wird mit der Identifizierung des Objektes abgeglichen, die unter Verwendung der Kameras erfolgt.

Erfindungsgemäß ist für mindestens eine der Kameras ein Analysebereich einstellbar, in dem eine Identifizierung des Objektes erfolgen kann. Hierdurch kann der Analyseaufwand bei der Erkennung des Objektes zugunsten einer reduzierten Rechenperformance gezielt fokussiert werden. Dabei ist vorgesehen, dass der Analysebereich durch das Ergebnis einer Gestenerkennung, die einen oder mehrere spezifische Körperteile einer Person erkennt, eingegrenzt wird. Wenn beispielsweise durch die Erkennung einer Handbewegung im Bereich eines Scanners festgestellt wird, dass ein Kunde eine Ware scannen lassen will, so kann der Analysebereich auf den Bereich der Hand und benachbarter Körperteile (wie z.B. Armbeuge) des Kunden beschränkt werden.

Wie bereits erwähnt, handelt es sich bei dem Objekt gemäß einem Ausführungsbeispiel der Erfindung um eine Ware, wobei das erfindungsgemäße Verfahren an einer Selbstbedienungskasse eines Supermarktes oder eines anderen Warenverkaufsgeschäftes ausgeführt wird. Die Ware wird am Ursprungsort in einem Warenkorb und/oder auf einer Warenablage erfasst und am Zielort in einem Warenkorb, einer Warenablage, einer Packmulde oder einem Packtisch erfasst.

Die Erfindung wird nachfolgend unter Bezugnahme auf die Figur der Zeichnung anhand eines Ausführungsbeispiels näher erläutert. Es zeigt:

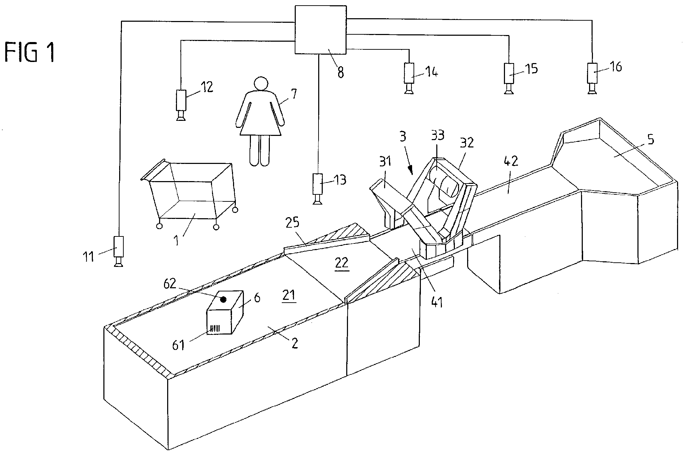

- Figur 1: schematisch ein Ausführungsbeispiel einer Selbstbedienungskasse, die eine Mehrzahl von Kameras zur lückenlosen Überwachung des Transportes eines Objektes von einem Ursprungsort bis zu einem Zielort aufweist.

Die Figur 1 zeigt beispielhaft eine Vorrichtung zum Identifizieren und Verfolgen von Waren in einem Supermarkt oder einem anderen Warenverkaufsmarkt, die zwischen einem Ursprungsort und einem Zielort transportiert werden, wobei dieser Transport zumindest teilweise automatisch über Warentransportbänder erfolgen kann. Eine solche Vorrichtung wird auch als automatisierte Kasse bzw. automatisierte Selbstbedienungskasse oder "Automated Checkout-Kasse" (ACO) bezeichnet.

Ebenso können beim Transport der Waren an einer rein manuellen Selbstbedienungskasse ("Self Checkout-Kasse" (SCO)) diese Waren beim bloßen manuellen Vorbeiführen (bspw. in der Hand) identifiziert und auf dem Weg zur Packfläche oder in das dazu vorgesehene Behältnis (Einkaufskorb, Kunden-Einkaufsbeutel etc.) verfolgt werden.

Die abgebildete erfindungsgemäße Vorrichtung umfasst eine Mehrzahl von Kameras 11 bis 16, die mit einer zentralen Auswerteinheit 8 verbunden sind. Die Vorrichtung umfasst des Weiteren eine Warenablage 2 für Waren 6 mit Warentransportbändern 21, 22, weitere Warentransportbänder 41, 42, eine Erkennungseinheit 3 sowie eine Zielablage 5, die im dargestellten Ausführungsbeispiel als Packmulde ausgebildet ist.

Für eine rein manuelle Selbstbedienungskasse (SCO) entfallen die Warentransportbänder 21, 22 und eventuell auch die Warentransportbänder 41, 42.

Die Erkennungseinheit 3 kann als stationärer Barcode-Scanner ausgebildet sein, kann jedoch auch aus einer bildgebenden Kamera bestehen, die die Waren anhand seiner rein charakteristischen Merkmale (Farbe, Form, Größe, Textur, Logo, Oberflächenbeschaffenheit etc.) eindeutig identifiziert. Desweiteren können auf den Waren anstelle des bzw. zusätzlich zum herkömmlichen Barcode auch für die Kamera oder den Scanner sichtbare "digitale Wasserzeichen" aufgebracht sein, die ein eindeutiges Identifizieren des Objektes weiter vereinfachen und beschleunigen. Solche digitale Wasserzeichen werden beispielsweise von der Firma Digimarc aus Portland, Oregon, USA angeboten.

Es wird die Situation betrachtet, dass ein Kunde 7 ein oder mehrere Waren 6 in einem Warenverkaufsgeschäft zum Kauf ausgewählt und in einem Warenablagekorb 1, der rollbar oder tragbar ausgebildet sein kann, gesammelt hat. Mit dem Warenkorb 1 bewegt sich der Kunde 7 zur Selbstbedienungskasse. Der Kunde 7 legt die einzelnen Waren 6 auf die Warenablage 2. Diese umfasst im dargestellten Ausführungsbeispiel, jedoch nicht notwendigerweise, zwei Förderbänder 21, 22, mittels derer die Ware 6 in Richtung der Erkennungseinheit 3 transportiert wird. Dabei kann vorgesehen sein, dass die Waren 6 auf dem Weg zur Erkennungseinheit 3 vereinzelt werden, beispielsweise indem das Warentransportband 22 sich mit einer höheren Geschwindigkeit bewegt als das Warentransportband 21, sowie durch sich trichterförmig verjüngende Seitenbegrenzungen 25 im Bereich des Warentransportbandes 22. Dies ist aber nur beispielshaft zu verstehen und nicht notwendigerweise der Fall.

Vom Warentransportband 22 wird die zu transportierende Ware an ein weiteres Warentransportband 41 übergeben. Dem Warentransportband 41 ist die Erkennungseinheit 3 zugeordnet, bei der es sich beispielsweise um einen Tunnelscanner handelt, der dazu eingerichtet und vorgesehen ist, die auf dem Transportband 41 angeordnete und vereinzelte Ware jeweils einzeln zu scannen und zu registrieren. Der Tunnelscanner 3 weist im dargestellten Ausführungsbeispiel zwei winklig angeordnete Tore 31, 32 auf, an denen eine Mehrzahl von Scannern 33 und/oder andere Bilderfassungsgeräte montiert sind. Dieser Aufbau ist jedoch lediglich beispielhaft zu verstehen. Der Tunnelscanner 3 kann auch in anderer Weise ausgebildet sein.

Die Ware 6 weist einen Barcode 61 auf. Dieser Barcode 61 wird im Tunnelscanner 3 gescannt und hierdurch die Ware 6 identifiziert und registriert. Die Identifikation dient dazu, einen Preis der Ware zu erfassen und anzugeben. Zusätzlich kann der Kauf der Ware in einer Artikel-Datenbank vermerkt werden, beispielsweise, um rechtzeitig den entsprechenden Artikel nachzubestellen.

Es wird darauf hingewiesen, dass die Erkennungseinheit 3 nicht zwingend als Scanner ausgebildet ist, der einen Barcode 61 der Ware erfasst. Die Erkennungseinheit 3 kann alternativ oder zusätzlich auch andere Merkmale zur Identifizierung erfassen, beispielsweise die geometrische Form oder die Farbe sowie Schriftzüge einschließlich Logos auswerten.

Die Erfassungseinheit 3 kann beispielsweise statt eines stationären Barcode-Scanners oder ergänzend dazu eine bildgebende Kamera aufweisen, die die Waren anhand ihrer rein charakteristischen Merkmale (Farbe, Form, Größe, Textur, Logo, Oberflächenbeschaffenheit etc.) eindeutig identifiziert. Desweiteren können auf den Waren anstelle des bzw. zusätzlich zum herkömmlichen Barcode für die Kamera oder den Scanner sichtbare "digitale Wasserzeichen" aufgebracht sein, die ein eindeutiges Identifizieren des Objektes weiter vereinfachen und beschleunigen.

Auf den Waren angebrachte digitale Wasserzeichen, die einen eindeutigen maschinenlesbaren Code (bspw. einen Barcode) umfassen, aber für das menschliche Auge nicht oder kaum sichtbar ausgeprägt sind, können einen Manipulationsversuch noch besser und eindeutiger registrieren. Beispielsweise würde beim Versuch, einen Warenstapel anstelle eines einzelnen Produktes im sensierenden Bereich (Kameraanordnung oder auch Scanneranordnung) entlang zu bewegen (also vom Entnehmen aus dem Einkaufskorb entlang des Transportweges bis hin zum Packbereich), die Stapelung durch das Erkennen verschiedener Wasserzeichen erkannt und gemeldet werden. Auch eine geeignete Anordnung der digitalen Wasserzeichen zueinander auf den Waren kann Aufschluss darüber geben, ob es sich um ein oder mehrere Waren derselben Sorte handelt.

An das Transportband 41 schließt sich hinter der Erfassungseinheit 3 ein weiteres Transportband 42 an. Dieses ist optional. Sofern es vorhanden ist, weist es bevorzugt die gleiche Bandgeschwindigkeit wie das davor angeordnete Transportband 41 auf. Alternativ kann sich das Transportband 41 auch bis zum Zielort 5 erstrecken. Der Zielort 5 ist als Packmulde ausgebildet, in der die ursprünglich in dem Warenkorb 1 befindlichen Waren sich nach ihrer Erfassung in der Erfassungseinheit 3 sammeln und nach Bezahlung durch den Kunden 7 entnommen werden können.

Zur Durchführung des Bezahlvorgangs kann vorgesehen sein, dass am Zielort 5 oder in räumlicher Nähe zu diesem ein oder mehrere Bezahlstationen (nicht dargestellt) angeordnet sind, an denen der Kunde die durch die Erkennungseinheit 3 gescannte und am Zielort 5 bereitgestellte Ware bezahlen kann.

Die vorliegende Vorrichtung sieht zusätzlich zu der Erfassung und Identifizierung der einzelnen Waren 6 in der Erkennungseinheit 3 eine lückenlose Verfolgung der einzelnen Waren 6 vom Warenkorb 1 bis zur Packmulde 5 vor. Der Warenkorb 1 wird dabei als Ursprungsort einer Transportbewegung aufgefasst, die die einzelne Ware 6 bis zum Zielort in Form der Packmulde 5 durchführt, wobei diese Transportbewegung teilweise manuell erfolgt, nämlich vom Warenkorb bis zur Ablagefläche 2, und teilweise automatisch, nämlich von der Warenablage 2 bis zur Packmulde 5. Alternativ kann auch die Warenablage 2 als Ursprungsort der Transportbewegung betrachtet werden, wobei für diesen Fall die Transportbewegung vollständig automatisch bis zum Zielort 5 erfolgt.

Die Warenablage 2 stellt insbesondere dann den Ursprungsort der betrachteten Transportbewegung dar, wenn der Kunde 7 nur wenige Waren kauft und diese nicht in einem Warenkorb angeordnet hat, sondern mit seinen Händen trägt.

Durch die Mehrzahl der Kameras 11 bis 16 erfolgt eine lückenlose Verfolgung eines Objektes 6 vom Ursprungsort 1 bis zum Zielort 5. Nachfolgend wird dabei der benachbart der Warenablage 2 positionierte Warenkorb 1 als Ursprungsort angesehen, wobei, wie erläutert, alternativ auch die Warenablage 2 als Ursprungsort angesehen werden kann.

Dem Warenkorb 1 ist eine erste Kamera 12 zugeordnet, die die einzelnen im Warenkorb 1 befindlichen Objekte erfasst und identifiziert. Bei der Kamera 12 und den weiteren Kameras handelt es sich beispielsweise um Videokameras, die fortlaufend ein Videobild an die Auswerteinheit 8 bereitstellen. Dabei kann vorgesehen sein, dass die Kamera 12 und die weiteren Kameras dazu ausgebildet sind, 3D-Informationen zu den einzelnen Waren 6 zu erfassen. Hierzu können beispielsweise Stereoanordnungen von Kameras vorgesehen sein (nicht gesondert dargestellt) bzw. Kameras mit zwei beabstandet zueinander angeordneten Linsensystemen verwendet werden. Des Weiteren kann zur Erfassung von 3D-Tiefeninformationen vorgesehen sein, dass die Kamera eine zusätzliche Beleuchtungseinrichtung aufweist, die ein strukturiertes Beleuchtungsmuster auf die einzelnen Waren projiziert, wobei über die Auswertung der Verzerrung des strukturierten Beleuchtungsmusters 3D-Informationen erhalten werden können.

Weiter wird darauf hingewiesen, dass es sich bei der Kamera 12 um eine Farbkamera handeln kann, für welchen Fall auch Farbinformationen ausgewertet werden können.

In der Auswerteinheit 8 oder alternativ in einer in die Kamera 12 integrierten Auswerteinheit werden die von der Kamera 12 erfassten Bildinformationen dahingehend ausgewertet, dass die einzelnen im Warenkorb 1 befindlichen Waren 6 identifiziert werden. Hierzu ist es erforderlich, dass zu jeder Ware 6 mindestens ein Merkmal erfasst wird, das es erlaubt, die Ware im Warenkorb 1 als individuelle Ware zu erkennen. Hierzu steht eine Anzahl von Optionen zur Warenidentifizierung zur Verfügung. Beispielsweise kann vorgesehen sein, eine Ware über die Erfassung von 3D- und/oder Farbinformationen zu identifizieren.

Weiter kann vorgesehen sein, dass in der Auswerteinheit 8 bestimmte Muster der Ware erkannt und zugeordnet werden, beispielsweise ein Logo 62 (in der Figur 1 schematisch dargestellt), mit Hilfe dessen sich die Ware individualisieren lässt. Eine weitere Möglichkeit der Identifizierung der Ware besteht darin, auf der Ware enthaltene Textinformation auszuwerten. Des Weiteren ist es natürlich auch möglich, einen auf der Ware enthaltenen Barcode 61 zu erfassen und hierüber die Ware zu identifizieren. Hierzu wird das Bild des Barcodes 61 - nach einer eventuell erforderlichen Entzerrung - ausgewertet. Eine solche Auswertung erfolgt beispielsweise über eine Datenbankabfrage, wobei sich die Datenbank z.B. auf einem Datenbankserver im Backoffice, einem direkt angeschlossenen weiteren Personal Computer oder als gespiegelte Datenbank-Kopie auf der Auswerteinheit 8 selbst (die z.B. als Personal Computer ausgebildet ist) befinden kann. In einer Ausgestaltung ist ein Abgleich mit einem zentralen Server vorgesehen, von dem aus sämtliche weitere Geräte einer Filiale aus neu erlernten Informationen abgeglichen werden können. Dieser Abgleich kann sofort oder auch nach einem Intervall erfolgen wie zum Beispiel stunden-, tage- oder wochenweise.

Die genannten Verfahren zur Identifizierung einer Ware 6 können auch kombiniert eingesetzt werden. Weiter wird darauf hingewiesen, dass die Identifizierung der in dem Warenkorb 1 befindlichen Waren sukzessive erfolgen kann, während der Kunde 7 die einzelnen Waren aus dem Warenkorb 1 auf die Warenablage 2 legt. So ist davon auszugehen, dass zumindest einzelne der Waren anfänglich durch andere Waren im Warenkorb 1 verdeckt sind.

Über die Kamera 12 kann somit eine Identifizierung sämtlicher in dem Warenkorb 1 befindlicher Waren erfolgen. Die einzelnen identifizierten Waren 6 werden auf ihrem Weg bis zum Zielort 5 durch die weiteren Kameras 11, 13, 14 15, 16 lückenlos verfolgt. Dabei ist vorgesehen, dass die Bildbereiche, die die einzelnen Kameras 11 bis 16 erfassen, aneinander angrenzen oder einander überlappen, so dass der Weg einer Ware bis zum Ursprungsort ohne Unterbrechung erfasst werden kann.

Die in Bezug auf die Kamera 12 beschriebene Identifizierung der einzelnen Waren 6 erfolgt auch mittels der weiteren Kameras 11, 13, 14, 15, 16 in Verbindung mit der Auswerteinheit 8. Gemäß einem Ausführungsbeispiel ermittelt jede dieser Kameras mindestens ein Merkmal der Ware, mittels dessen eine Identifizierung der Ware gegenüber den anderen ursprünglich im Warenkorb 1 angeordneten Waren möglich ist. Diese Identifizierung kann, muss aber nicht die Erfassung des Barcodes 61 der jeweiligen Ware umfassen.

Die Kamera 11 ist dem Transportband 21 der Warenablage 2 zugeordnet. Die Kamera 13 ist dem Transportband 22 zugeordnet. Die Kamera 14 ist dem Transportband 41 zugeordnet. Die Kamera 15 ist dem Transportband 42 zugeordnet. Die Kamera 16 ist dem Zielort bzw. der Packmulde 5 zugeordnet. Offensichtlich handelt es sich hierbei nur um eine beispielhafte Anordnung von Kameras. Beispielsweise kann alternativ eine Vorrichtung mit einem herkömmlichen Kassenarbeitsplatz vorgesehen sein, der durch ein sitzendes oder stehendes Kassenpersonal bedient wird und der zur selbstbedienten SelfScan-Kasse (bspw. durch Drehung des Bildschirms von Kassiererseite zur Kundenseite) umfunktionierbar ist. Bei einer solchen Vorrichtung ist nicht notwendigerweise ein Transportband 42 zwischen Scanner und Packmulde 5 vorgesehen, so dass bei der Anordnung der Kameras die Kamera 15 entfallen könnte. In Abhängigkeit von dem genauen Aufbau der Selbstbedienungskasse, der Anzahl und Länge der Förderbänder und dem Bildbereich, den jede Kamera erfasst, kann eine unterschiedliche Anordnung und Anzahl von Kameras vorgesehen sein. Grundsätzlich ist es auch möglich, nur eine einzige Kamera vorzusehen, wenn diese mit ausreichender Auflösung den gesamten Bereich der Selbstbedienungskasse erfasst.

Die dem Zielort zugeordnete Kamera 16 identifiziert die einzelnen in der Packmulde 5 sich sammelnden, ursprünglich im Warenkorb 1 angeordneten Waren. Durch Vergleich der Ware und deren Anzahl mit den ursprünglich im Ursprungsort angeordneten Waren und deren Anzahl kann leicht ausgewertet werden, ob bestimmte Waren während des Transportes entfernt und/oder andere Waren hinzugefügt und/oder bestimmte Waren durch andere Waren ersetzt wurden. Es erfolgt somit ein Abgleich zwischen den detektierten Waren zum einen am Ursprungsort (Warenkorb 1) und zum anderen am Zielort (Packmulde 5).

Dieser Abgleich wird beispielsweise konkret dadurch realisiert, dass fortlaufend ein Vergleich vorgenommen wird zwischen Merkmalen 61, 62 der jeweiligen Ware, die die jeweils zuvor angeordnete Kamera detektiert hat, mit Merkmalen 61, 62 der Ware, die die nächst folgende Kamera erkennt. Alternativ erfolgt ein Abgleich nur aufgrund von Merkmalen, die die dem Ursprungsort zugeordnete Kamera und die dem Zielort zugeordnete Kamera erfasst.

Weiter kann zur Realisierung des Abgleichs vorgesehen sein, dass Merkmale zu einer Ware, die eine zuvor angeordnete Kamera erfasst hat, in einer Datenbank hinterlegt werden, wodurch eine Ware erkannt oder mutmaßlich erkannt wird. Diese in der Datenbank hinterlegten Merkmale werden dann verglichen mit Merkmalen, die eine nachgeordnete Kamera zur der betrachteten Ware tatsächlich erfasst. Dabei kann auch vorgesehen sein, dass einer Ware aufgrund der in der Datenbank gespeicherten Informationen Merkmale zugeordnet werden, die die zuvor angeordnete Kamera gar nicht erfasst hat, die sich jedoch aus der mutmaßlichen Identifizierung der Ware ergeben. Die Merkmale, die die nachher angeordnete Kamera tatsächlich erfasst, werden dann auch mit solchen ergänzten Merkmalen verglichen und diese dabei ggf. bestätigt.

In einer vereinfachten Ausgestaltung der Erfindung erfolgt eine Identifizierung der Waren nur über die Kamera 12 am Ursprungsort 1 und über die Kamera 16 am Zielort 5, während die weiteren Kameras 11, 13, 14, 15, die entlang der Förderbänder 21, 22, 41, 42 angeordnet sind, keine Warenidentifizierung vornehmen, sondern lediglich dazu dienen, den kontinuierlichen Transport der Ware zu erfassen und zu dokumentieren. Hierzu kann beispielsweise die Auswerteinheit 8 eine Logik enthalten, die durch Aneinandersetzen der aneinander angrenzenden bzw. sich überlappenden Bilder der einzelnen Kameras, auch als "Stitching" bezeichnet, die korrekte Übergabe einer Ware von einer Kamera zur nächsten Kamera erfasst und überwacht.

Ein Aneinandersetzen der aneinander angrenzenden bzw. sich überlappenden Bilder erfolgt beispielsweise mit Hilfe von überlappenden Kamerasichtbereichen, in denen die Ware beim Übergang ("Handover") von einer Kamera zur anderen immer zumindest teilweise sichtbar ist. Anderenfalls (z.B. bei größeren Wegstrecken) muss die nächste Kamera dieselben bzw. zumindest eine definierte Anzahl von charakteristischen Merkmalen des Objektes von der vorherigen Kamera wiederfinden, um den gültigen Übergang von einem Kamerabereich zum nächsten zu erkennen.

Erfindungsgemäß wird eine Gestenerkennung (bei der z.B. die Hand des Käufers oder Teile davon wie Finger, Handrücken etc. erkannt werden) dazu genutzt, Artikel in der bewegten Hand (die in den Kamerabereich hinein bewegt oder aus dem Kamerabereich hinaus bewegt wird) zu vermuten und hierdurch ausgelöst eine Analyse bzw. einen Merkmalsvergleich für eine tatsächliche Ware anzustoßen. Eine spezifische Erkennung von Körperteilen kann das anzunehmende Suchfeld für das Vorhandensein möglicher Artikel (in Hand, Armbeuge etc.) in eine "Region of Interest (ROI)" eingrenzen und für die Analyse gezielt fokussieren, zugunsten einer reduzierten Rechenperformance. Diese Ausgestaltung ist von besonderem Interesse bei einer rein manuellen Selbstbedienungskasse (SCO) ohne Warentransportbänder.

Bevorzugt erfolgt zusätzlich ein Abgleich zwischen der lückenlosen Überwachung der Ware zwischen dem Ursprungsort 1 und dem Zielort 5 und dem Ergebnis der Warenerkennung in der Erkennungseinheit 3. Diese identifiziert, wie bereits erläutert, die jeweilige Ware 6 auch noch einmal gesondert. Durch die Kombination der beschriebenen Überwachung mit dem Identifizierungsergebnis der Erkennungseinheit 3 kann die valide Durchführung des Erkennungsprozesses in der Erkennungseinheit 3 bestätigt und können Unstimmigkeiten aufgezeigt werden, in welchem Fall der Bediener und/oder das Personal des Wareneinkaufsgeschäftes entsprechend benachrichtigt werden.

Eine Unstimmigkeit liegt insbesondere dann vor, wenn die Anzahl der gescannten Objekte von der Anzahl der zwischen Ursprungsort 1 und Zielort 5 transportierten Objekte abweicht. Dies kann beispielsweise dann der Fall sein, wenn in der Erkennungseinheit 3, zum Beispiel beim Scannen des Barcodes, zwei Objekte übereinander liegen und dabei das eine Objekt den Barcode des anderen Objekts verdeckt. Durch die Kombination des Identifizierungsergebnisses (Scanergebnisses) der Erkennungseinheit 3 mit der lückenlosen Verfolgung der einzelnen Objekte im Bereich der Selbstbedienungskasse durch die Kameras 11 bis 16 kann in besonders zuverlässiger Weise die Gefahr eines Missbrauchs, einer Manipulation oder einer versehentlichen Fehlbedienung verhindert werden.

In einer Abwandlung der in Figur 1 dargestellten Selbstbedienungskasse ist die Selbstbedienungskasse ohne die Erkennungseinheit 3 ausgebildet. Dies ist möglich, da jede Ware 6 bereits im Warenkorb 1 und/oder auf der Warenablage 2 erfasst und identifiziert wird, und eine lückenlose Verfolgung der einzelnen Waren bis zum Zielort 5 erfolgt. Dabei kann, wie erläutert, vorgesehen sein, dass ein Barcode 61 der Ware bereits über die Kamera 12 (und/oder die Kamera 11) erfasst und in Verbindung mit der Auswerteinheit 8 ausgewertet wird. Alternativ oder ergänzend können die einzelnen Waren auch durch andere Merkmale, wie optische Merkmale, Größe, Aufschrift, Logos etc. erfasst werden.

Gemäß der bereits zuvor beschriebenen erfindungsgemäßen Ausführung ist für mindestens eine der Kameras ein Analysebereich einstellbar, in dem eine Identifizierung des Objektes sowie ergänzend eine Gestenerkennung bei der Bedienung erfolgt. Dadurch kann das System für das Verfahren auch nur mit einer einzigen Kamera ausgestattet sein, dessen Sichtbereich sich
a) über mindestens einen der Teilbereiche vom Entnehmen aus dem Warenkorb, Transportieren bzw. Führen über den Scan-Bereich bis hin zum Platzieren auf der Ablage bzw. in die Einkaufstasche, oder
b) über den gesamten Bereich
erstreckt.

Die Erfindung beschränkt sich in ihrer Ausgestaltung nicht auf die beschriebenen Ausführungsbeispiele, die lediglich beispielhaft zu verstehen sind. Insbesondere sind Anzahl und Anordnung der Kameras und der Warentransportbänder sowie die Ausführung der Erkennungseinheit 3 und der Selbstbedienungskasse insgesamt nur beispielhaft zu verstehen.

## Patentansprüche

1. Vorrichtung zum Identifizieren und Verfolgen eines Objektes (6), das zwischen einem Ursprungsort (1) und einem Zielort (5) transportiert wird,
wobei die Vorrichtung mindestens eine Kamera (11-16) aufweist und dazu ausgebildet ist, unter Verwendung der mindestens einen Kamera (11-16) das Objekt (6) zu identifizieren und den Transport des Objektes (6) vom Ursprungsort (1) bis zum Zielort (5) lückenlos zu verfolgen,
**dadurch gekennzeichnet,**
**dass** für mindestens eine der Kameras ein Analysebereich, in dem eine Identifizierung des Objekts (6) erfolgen kann, einstellbar ist; und
**dass** die Vorrichtung ferner ausgebildet ist, durch das Ergebnis einer Gestenerkennung, die einen oder mehrere spezifische Körperteile einer Person erkennt, für die mindestens eine Kamera (11-16) den Analysebereich auf den Bereich der erkannten Geste einzugrenzen, wobei die Identifizierung des Objektes (6) durch die Gestenerkennung ausgelöst wird.

2. Vorrichtung nach Anspruch 1, **dadurch gekennzeichnet, dass** die Vorrichtung eine Vielzahl von Kameras (11-16) aufweist, die an verschiedenen Orten der Vorrichtung installiert sind, wobei die Bildbereiche, die die Kameras (11-16) erfassen, aneinander angrenzen oder einander überlappen, und wobei die von den Kameras (11-16) bereitgestellten Informationen an eine Auswerteinheit (8) übertragen werden.

3. Vorrichtung nach Anspruch 1 oder 2, **dadurch gekennzeichnet, dass** die Vorrichtung Mittel (8) aufweist, die dazu vorgesehen und ausgebildet sind, anhand der von der mindestens einen Kamera (11-16) bereitgestellten Informationen mindestens ein Merkmal (61, 62) des Objektes (6) zumindest am Ursprungsort (1) und am Zielort (5) zu erfassen.

4. Vorrichtung nach Anspruch 3, **dadurch gekennzeichnet, dass** die Kamera oder mindestens eine der Kameras (11-16) dazu ausgebildet ist, einen auf einem Objekt (6) angeordneten Barcode (61) und/oder ein auf dem Objekt (6) angeordnetes digitales Wasserzeichen zu erfassen.

5. Vorrichtung nach einem der vorangehenden Ansprüche, **dadurch gekennzeichnet, dass** die Vorrichtung dazu ausgebildet ist, unter Verwendung der mindestens einen Kamera (11-16) eine Mehrzahl von Objekten (6), die am Ursprungsort (1) bereitgestellt sind, bis zum Zielort (5) lückenlos zu verfolgen, und diese Objekte (6) einschließlich ihrer Anzahl am Zielort (5) zu erkennen.

6. Vorrichtung nach einem der vorangehenden Ansprüche, **dadurch gekennzeichnet, dass** die Vorrichtung eine Erkennungseinheit (3) umfasst, in der das Objekt (6) gesondert identifiziert wird, und das Ergebnis dieser Identifizierung verwendet wird, um einen Abgleich mit der Identifizierung des Objekts (6) vorzunehmen, die unter Verwendung der mindestens eine Kamera (11-16) erfolgt.

7. Vorrichtung nach Anspruch 6, **dadurch gekennzeichnet, dass** die Vorrichtung ein oder mehrere Kameras (11-16) umfasst, die derart angeordnet sind, dass sie
- das Objekt (6) am Ursprungsort (1) erkennen,
- den Transport des Objektes (6) vom Ursprungsort (1) zu der Erkennungseinheit (3) überwachen,
- den weiteren Transport des Objektes (6) von der Erkennungseinheit (3) zum Zielort (5) überwachen, und
- das Objekt (6) am Zielort (5) überwachen.

8. Vorrichtung nach einem der vorangehenden Ansprüche, **dadurch gekennzeichnet, dass** die Vorrichtung eine Selbstbedienungskasse eines Supermarktes oder eines anderen Warenverkaufsgeschäfts ist.

9. Verfahren zum Identifizieren und Verfolgen eines Objektes (6), das zwischen einem Ursprungsort (1) und einem Zielort (5) transportiert wird,
wobei unter Verwendung mindestens einer Kamera (11-16) das Objekt (6) identifiziert und der Transport des Objektes (6) vom Ursprungsort (1) bis zum Zielort (5) lückenlos verfolgt wird,
**dadurch gekennzeichnet,**
**dass** für mindestens eine der Kameras ein Analysebereich, in dem eine Identifizierung des Objekts (6) erfolgen kann, einstellbar ist; und
**dass** durch das Ergebnis einer Gestenerkennung, die einen oder mehrere spezifische Körperteile einer Person erkennt, für die mindestens eine Kamera (11-16) der Analysebereich auf den Bereich der erkannten Geste eingegrenzt wird, wobei die Identifizierung des Objektes (6) durch die Gestenerkennung ausgelöst wird.

10. Verfahren nach Anspruch 9, **dadurch gekennzeichnet, dass** mindestens ein Merkmal (61, 62) des Objektes (6) zumindest am Ursprungsort (1) und am Zielort (5) erfasst und auf diese Weise festgestellt wird, ob das betrachtete Objekt (6) vom Ursprungsort (1) bis zum Zielort (6) transportiert wurde.

11. Verfahren nach Anspruch 10, **dadurch gekennzeichnet, dass** als Merkmal (61, 62) des Objektes (6) ein optisches Merkmal, ein Barcode und/oder ein digitales Wasserzeichen erfasst wird.

12. Verfahren nach einem der Ansprüche 9 bis 11, **dadurch gekennzeichnet, dass** das Objekt (6) bei seinem Transport zwischen Ursprungsort (1) und Zielort (5) eine Erkennungseinheit (3) durchläuft, in der das Objekt (6) gesondert identifiziert wird, und das Ergebnis dieser Identifizierung mit der Identifizierung des Objekts (6) abgeglichen wird, die unter Verwendung der mindestens einen Kamera (11-16) erfolgt.

13. Verfahren nach einem der Ansprüche 9 bis 12, **dadurch gekennzeichnet, dass** eine Mehrzahl von Objekten (6), die am Ursprungsort (1) vorhanden sind oder dort abgelegt werden, und die einem Bezahlvorgang zugeordnet sind, in ihrem Transport zum Zielort (5) lückenlos überwacht werden, wobei die Anzahl der Objekte (6) am Ursprungsort (1) und die Anzahl der Objekte (6) am Zielort (5) erfasst werden.

14. Verfahren nach einem der Ansprüche 9 bis 13, **dadurch gekennzeichnet, dass** das Objekt (6) eine Ware ist und das Verfahren an einer Selbstbedienungskasse eines Supermarktes oder eines anderen Warenverkaufsgeschäfts ausgeführt wird, wobei am Ursprungsort (1) die Ware (6) in einem Warenkorb (1) und/oder auf einer Warenablage (2) erfasst wird und am Zielort (5) die Ware (6) in einem weiteren Warenkorb, einer Warenablage, einer Packmulde, einem Packtisch oder dergleichen erfasst wird.

## Claims

1. Device for identifying and tracking an object (6) which is transported between an originating location (1) and a destination location (5),
the device having at least one camera (11-16) and being configured to identify the object (6) using the at least one camera (11-16) and to track the transport of the object (6) from the originating location (1) as far as the destination location (5) without gaps,
**characterized**
**in that** an analysis region in which an identification of the object (6) can take place is settable for at least one of the cameras; and
**in that** the device is furthermore configured, by way of the result of a gesture recognition that recognizes one or more specific body parts of a person, to delimit the analysis region to the region of the recognized gesture for the at least one camera (11-16), the identification of the object (6) being initiated by the gesture recognition.

2. Device according to Claim 1, **characterized in that** the device has a plurality of cameras (11-16) installed at various locations of the device, the image regions captured by the cameras (11-16) adjoining one another or overlapping one another, and the information provided by the cameras (11-16) being transmitted to an evaluation unit (8).

3. Device according to Claim 1 or 2, **characterized in that** the device has means (8) provided and configured to capture at least one feature (61, 62) of the object (6) at least at the originating location (1) and at the destination location (5) on the basis of the information provided by the at least one camera (11-16).

4. Device according to Claim 3, **characterized in that** the camera or at least one of the cameras (11-16) is configured to capture a barcode (61) arranged on an object (6) and/or a digital watermark arranged on the object (6).

5. Device according to any of the preceding claims, **characterized in that** the device is configured, using the at least one camera (11-16), to track a plurality of objects (6) provided at the originating location (1) as far as the destination location (5) without gaps, and to recognize these objects (6) including the number thereof at the destination location (5).

6. Device according to any of the preceding claims, **characterized in that** the device comprises a recognition unit (3), in which the object (6) is identified separately, and the result of this identification is used to carry out a comparison with the identification of the object (6) that is effected using the at least one camera (11-16).

7. Device according to Claim 6, **characterized in that** the device comprises one or more cameras (11-16) arranged in such a way that they
- recognize the object (6) at the originating location (1),
- monitor the transport of the object (6) from the originating location (1) to the recognition unit (3),
- monitor the further transport of the object (6) from the recognition unit (3) to the destination location (5), and
- monitor the object (6) at the destination location (5) .

8. Device according to any of the preceding claims, **characterized in that** the device is a self-checkout of a supermarket or some other business that sells goods.

9. Method for identifying and tracking an object (6) which is transported between an originating location (1) and a destination location (5),
the object (6) being identified and the transport of the object (6) from the originating location (1) as far as the destination location (5) being tracked without gaps, using at least one camera (11-16),
**characterized**
**in that** an analysis region in which an identification of the object (6) can take place is settable for at least one of the cameras; and
**in that**, by way of the result of a gesture recognition that recognizes one or more specific body parts of a person, the analysis region is delimited to the region of the recognized gesture for the at least one camera (11-16), the identification of the object (6) being initiated by the gesture recognition.

10. Method according to Claim 9,
**characterized in that** at least one feature (61, 62) of the object (6) is captured at least at the originating location (1) and at the destination location (5) and in this way it is ascertained whether the object (6) considered was transported from the originating location (1) as far as the destination location (5).

11. Method according to Claim 10, **characterized in that** an optical feature, a barcode and/or a digital watermark are/is captured as feature (61, 62) of the object (6).

12. Method according to any of Claims 9 to 11, **characterized in that** the object (6), during its transport between originating location (1) and destination location (5), passes through a recognition unit (3), in which the object (6) is identified separately, and the result of this identification is compared with the identification of the object (6) that is effected using the at least one camera (11-16).

13. Method according to any of Claims 9 to 12, **characterized in that** a plurality of objects (6) which are present at the originating location (1) or are placed there and which are assigned to a payment process are monitored without gaps in terms of their transport to the destination location (5), the number of objects (6) at the originating location (1) and the number of objects (6) at the destination location (5) being captured.

14. Method according to any of Claims 9 to 13, **characterized in that** the object (6) is a product and the method is carried out at a self-checkout of a supermarket or some other business that sells goods, at the originating location (1) the product (6) being captured in a shopping basket (1) and/or on a product placement area (2), and at the destination location (5) the product (6) being captured in a further shopping basket, a product placement area, a packing trough, a packing table or the like.

## Revendications

1. Dispositif permettant d'identifier et de suivre un objet (6) qui est transporté entre un lieu d'origine (1) et un lieu de destination (5),
le dispositif présentant au moins une caméra (11 à 16) et étant réalisé pour identifier l'objet (6) en utilisant ladite au moins une caméra (11 à 16) et pour suivre intégralement le transport de l'objet (6) du lieu d'origine (1) jusqu'au lieu de destination (5),
**caractérisé en ce que**
pour au moins l'une des caméras, une zone d'analyse peut être réglée dans laquelle une identification de l'objet (6) peut avoir lieu ; et
le dispositif est en outre réalisé, par le résultat d'une reconnaissance de geste qui identifie une ou plusieurs parties du corps spécifiques d'une personne, pour limiter pour ladite au moins une caméra (11 à 16) la zone d'analyse à une zone du geste reconnu, l'identification de l'objet (6) étant déclenchée par la reconnaissance de geste.

2. Dispositif selon la revendication 1, **caractérisé en ce que** le dispositif présente une pluralité de caméras (11 à 16) qui sont installées à différents endroits du dispositif, les zones d'image qui sont détectées par les caméras (11 à 16) étant adjacentes les unes aux autres ou se recouvrant les unes les autres, et les informations fournies par les caméras (11 à 16) étant transmises à une unité d'évaluation (8).

3. Dispositif selon la revendication 1 ou 2, **caractérisé en ce que** le dispositif présente des moyens (8) qui sont prévus et réalisés pour détecter, à l'aide des informations fournies par ladite au moins une caméra (11 à 16), au moins une particularité (61, 62) de l'objet (6) au moins au lieu d'origine (1) et au lieu de destination (5).

4. Dispositif selon la revendication 3, **caractérisé en ce que** la caméra, ou au moins l'une des caméras (11 à 16), est réalisée pour détecter un code à barres (61) disposé sur un objet (6) et/ou un filigrane numérique disposé sur l'objet (6).

5. Dispositif selon l'une quelconque des revendications précédentes, **caractérisé en ce que** le dispositif est réalisé, en utilisant ladite au moins une caméra (11 à 16), pour suivre intégralement une pluralité d'objets (6) qui sont fournies au lieu d'origine (1) jusqu'au lieu de destination (5), et pour reconnaître ces objets (6) y compris leur nombre au lieu de destination (5) .

6. Dispositif selon l'une quelconque des revendications précédentes, **caractérisé en ce que** le dispositif comprend une unité de reconnaissance (3) dans laquelle l'objet (6) est identifié séparément, et le résultat de cette identification est utilisé pour procéder à un rapprochement avec l'identification de l'objet (6) qui est effectuée en utilisant ladite au moins une caméra (11 à 16).

7. Dispositif selon la revendication 6, **caractérisé en ce que** le dispositif comprend une ou plusieurs caméras (11 à 16) qui sont disposées de telle sorte
- qu'elles reconnaissent l'objet (6) au lieu d'origine (1),
- qu'elles surveillent le transport de l'objet (6) du lieu d'origine (1) à l'unité de reconnaissance (3),
- qu'elles surveillent la suite du transport de l'objet (6) de l'unité de reconnaissance (3) au lieu de destination (5), et
- qu'elles surveillent l'objet (6) au lieu de destination (5).

8. Dispositif selon l'une quelconque des revendications précédentes, **caractérisé en ce que** le dispositif est une caisse en libre-service d'un supermarché ou d'un autre point de vente de marchandises.

9. Procédé permettant d'identifier et de suivre un objet (6) qui est transporté entre un lieu d'origine (1) et un lieu de destination (5),
dans lequel, en utilisant au moins une caméra (11 à 16), l'objet (6) est identifié et le transport de l'objet (6) est suivi intégralement du lieu d'origine (1) jusqu'au lieu de destination (5),
**caractérisé en ce que**
pour au moins l'une des caméras, une zone d'analyse peut être réglée dans laquelle une identification de l'objet (6) peut avoir lieu ; et
le résultat d'une reconnaissance de geste, qui identifie une ou plusieurs parties du corps spécifiques d'une personne, limite pour ladite au moins une caméra (11 à 16) la zone d'analyse à la zone du geste reconnu, l'identification de l'objet (6) étant déclenchée par la reconnaissance de geste.

10. Procédé selon la revendication 9, **caractérisé en ce qu'**au moins une particularité (61, 62) de l'objet (6) est détectée au moins au lieu d'origine (1) et au lieu de destination (5), et il est constaté de cette façon si l'objet observé (6) a été transporté du lieu d'origine (1) au lieu de destination (6).

11. Procédé selon la revendication 10, **caractérisé en ce que** comme particularité (61, 62) de l'objet (6), une particularité optique, un code à barres et/ou un filigrane numérique sont détectés.

12. Procédé selon l'une quelconque des revendications 9 à 11, **caractérisé en ce que** lors de son transport entre le lieu d'origine (1) et le lieu de destination (5), l'objet (6) passe par une unité de reconnaissance (3) dans laquelle l'objet (6) est identifié séparément, et le résultat de cette identification est rapproché de l'identification de l'objet (6) qui est effectuée en utilisant ladite au moins une caméra (11 à 16).

13. Procédé selon l'une quelconque des revendications 9 à 12, **caractérisé en ce qu'**une pluralité d'objets (6) qui existent au lieu d'origine (1) ou y sont enregistrés, et qui sont associés à une opération de paiement, est surveillée intégralement lors du transport au lieu de destination (5), le nombre des objets (6) au lieu d'origine (1) et le nombre des objets (6) au lieu de destination (5) étant détectés.

14. Procédé selon l'une quelconque des revendications 9 à 13, **caractérisé en ce que** l'objet (6) est une marchandise, et le procédé est effectué à une caisse en libre-service d'un supermarché ou d'un autre point de vente de marchandises, dans lequel, au lieu d'origine (1), la marchandise (6) est détectée dans un panier (1) et/ou sur un tapis roulant (2), et au lieu de destination (5), la marchandise (6) est détectée dans un autre panier, un tapis roulant, une sortie de caisse, une table d'emballage ou similaires.
